# EUROPEAN PATENT APPLICATION

(11) **EP 1 106 300 A2**
(43) Date of publication of application: **13.06.2001**
(21) Application number: 99830833.2
(22) Date of filing: 31.12.1999
(51) Int. Cl.: B23K 26/42

(54) **Pressure foot for welding heads**

(30) Priority: 07.12.1999 IT TO991079
(71) Applicant: Bisiach, Bruno, 10078 Venaria (TO) (IT)
(72) Inventor: Bisiach, Bruno, 10078 Venaria (TO) (IT)
(74) Representative: Robba, Pierpaolo

(57) **Abstract**

A pressure foot (8) for a welding head (2) employing a laser beam comprises a pressure arm (10) coupled with the welding head (2) and forming a contact surface arranged to press against the surface of a workpiece (28) to be welded; translation and rotation means (16) are provided between the pressure arm (10) and the welding head (2) to allow said arm (10) to perform a translation on a plane perpendicular to the laser beam and to rotate about an axis coinciding with the laser beam axis.

## Description

The present invention concerns a pressure foot for welding heads.

More particularly the invention concerns a pressure foot for welding heads employing a laser beam for plate welding.

It is known that laser welding of superimposed plates requires that the plate sheets be in close contact with each other. Actually, the focus of the laser beam must be located in the region between the two plate sheets and the tolerance admitted is of about 0.2 mm. Unfortunately, since the plates are almost never perfectly plane, often regions are present where the plates are spaced apart.

It is therefore necessary, during welding, to press the plates against each other, so as to eliminate possible regions where the plates are spaced apart.

In order to solve the problem of keeping the plates in contact with each other, some ancillary devices for laser welding heads have been proposed in the past.

Some examples are disclosed in patents US 5,832,417, US 5,324,913 and DE 4403999.

US patent 5,823,417 discloses a laser welding head associated with a pressure foot equipped with a pair of roller bearings arranged to exert a certain pressure in the close vicinity of the welding laser beam.

US patent 5,324,913 discloses a welding head associated with an L-shaped pressure foot equipped, at its end portion, with a pressure element having a circular opening in alignment with the laser beam. The pressure element is kept pressed onto the workpiece to be welded by a spring system.

DE patent 4403999 in turn discloses a welding head for welding several plate layers, which is equipped with a circular disc, inclined with respect to the working direction of the laser beam and exerting a pressure near the welding point.

Yet, the prior art devices only allow accomplishing rectilinear welds in zones where no obstacle or plate bend is present.

Such devices therefore are not suitable for use in connection with plates or section bars having a particular and shaped profile, such as for instance the flanks of railway coaches.

The present invention therefore aims at solving the problem of carrying out welding of plates and shaped plate sections, even including bends.

The above and other objects of the present invention are attained by means of the device as claimed in the appended claims.

Advantageously, according to the invention, a pressure foot is provided which is joined to the welding head and is provided at its free end with a pressing surface arranged to press the workpiece to be welded.

Moreover, between the foot and the welding head means are provided arranged to allow the translation of the pressure arm in at least one direction substantially perpendicular to the laser beam direction.

Thus, when the foot is pressed against the workpiece to be welded, the laser beam can move by a translational movement thus accomplishing a curved or rectilinear weld stroke.

Advantageously, during welding, the pressure arm does not slide over the plate, but it remains stationary, so that the plate is not "marked" or otherwise damaged.

The above and other objects of the invention will become more apparent from the description of two preferred embodiments, with reference to the accompanying drawings, in which:
- Fig. 1 shows, in front view and partly in cross-section, a laser welding head equipped with a pressure foot made in accordance with a first exemplary embodiment of the present invention;
- Fig. 2 shows, in top view, the free end of the pressure foot shown in Fig. 1 and a corresponding weld stroke;
- Fig. 3 shows, in front view, a system for coupling a laser welding head equipped with a pressure foot made in accordance with the present invention and a robotised arm;
- Fig. 4 shows, in front view and partly in cross-section, a laser welding head equipped with a pressure foot made in accordance with a second exemplary embodiment of the present invention;
- Fig. 5 shows, in side view and partly in cross-section, the laser welding head shown in Fig. 4;
- Fig. 6 shows, in bottom view, the laser welding head shown in Fig. 4; and
- Fig. 7 shows the path of a weld accomplished by means of the laser welding head shown in Fig. 4.

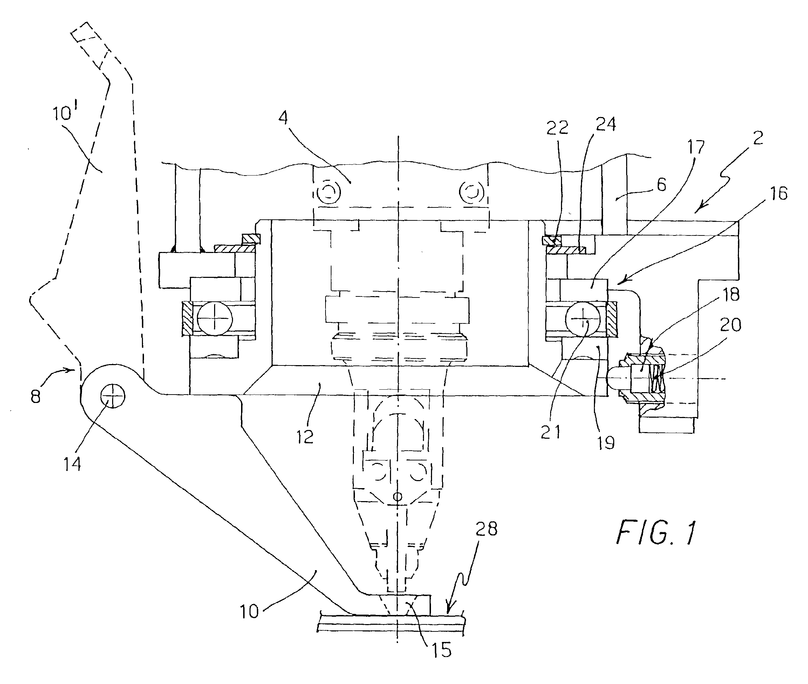

With reference to Fig. 1, a welding head 2 comprises a carrier structure 6 connected to a robotised arm 3, a focusing head 4 arranged to receive a laser beam and to focus it onto the workpiece to be welded, and a pressure foot 8, coupled to the carrier structure 6 and arranged to exert a certain pressure onto the workpiece to be welded.

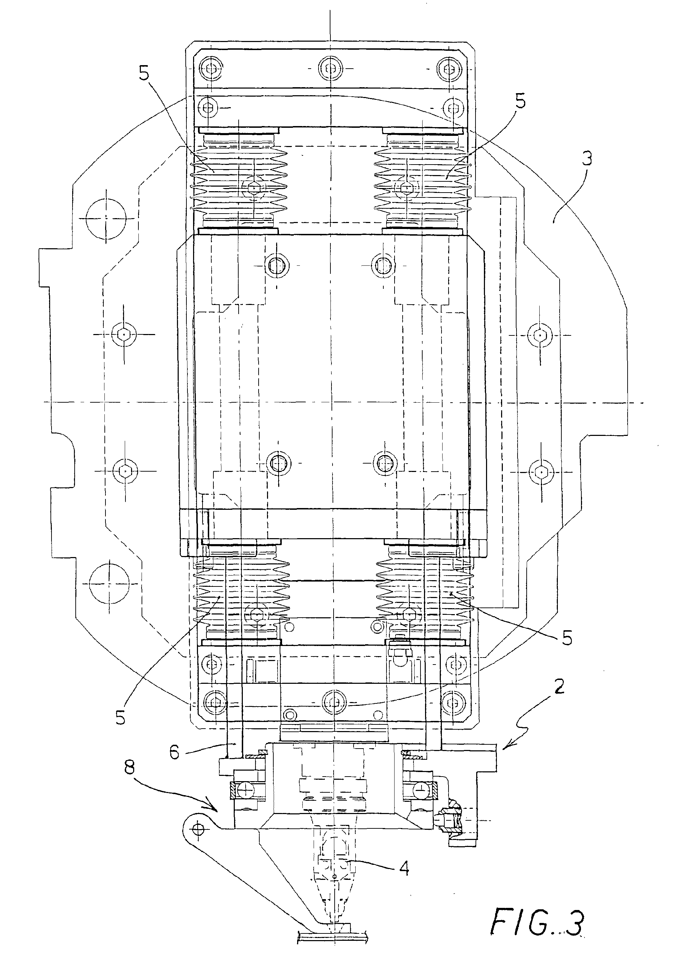

As shown in detail in Fig. 3, in order to allow pressure foot 8 to exert a suitable pressure onto the workpiece to be welded, the carrier structure 6 of welding head 2 is coupled with robotised arm 3 through a system of air springs 5. In this way the pressure exerted by foot 8 can be modulated at will by merely controlling the movements of robotised arm 3.

Pressure foot 8 comprises an upper portion 12 of circular shape, coupled with carrier structure 6 and provided with a circular opening through which focusing head 4 passes, and a pressure arm 10 which obliquely extends towards the welding zone. Pressure arm 10, which is pivotally mounted on upper portion 12 at point 14, can be easily overturned upwards to position 10' shown in dashed lines in Fig. 1, when its use is not necessary.

According to the invention, a plane bearing 16 is arranged between pressure foot 8 and carrier structure 6, which bearing allows a radial translation of foot 8 in all directions and an idle rotation of foot 8 relative to carrier structure 6.

Pressure foot 8 is joined with a first race 19 of plane bearing 16, whereas a second race is joined with head carrier structure 6. A plurality of balls 21 arranged between the two races thus allow ring 19, and consequently pressure foot 8, to rotate and perform a translational movement relative to head carrier structure 6.

The radial translation of pressure foot 6, allowed by plane bearing 16, is laterally limited by three contrasting elements 18, which are arranged externally of the circumference of upper portion 12, are mutually spaced apart by 120° along the circumference and are each provided with a spring 20, in order to oppose the movement of foot 8 and to bring the foot back to the central position when robotised arm 3 raises the welding head, thereby moving the pressure foot away from the workpiece to be welded.

On the contrary the rotary movement of pressure foot 8, allowed by the same plane bearing 16, is not limited whereby pressure arm 10 is prevented from hindering the movements of head 2. Such freedom of rotation is also exploited to orient pressure arm 10 with respect to head 2, in such a manner that no obstacle is found during welding. Actually, it is to be reminded that it would be impossible to orient pressure arm 10 by rotating head 2, which is mounted on arm 3, since said head could not rotate by 360°.

According to the invention, the pressure arm is therefore mounted on idle plane bearing 16 and the robot itself is entrusted with suitably orienting that pressure arm with the help of the obstacles found, by giving a tangential thrust to the pressure arm and making it rotate accordingly.

In order to partially slow down the rotation of pressure foot 8 and to allow robotised arm 3 to better control the foot position, a disc or ring 24, on which a radial stop resilient ring 22 rests, is provided on carrier structure 6. Resilient ring 22, or Sieger ring, is used for mounting foot 8 inside structure 6.

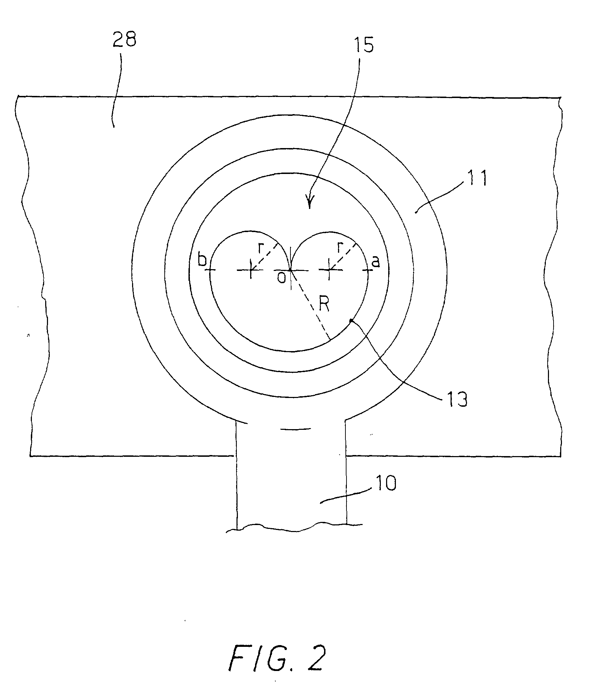

As shown in detail in Fig. 2, pressure arm 10 has, at its free end, a pressure ring 11 with an internal opening 15, with a diameter of about 15 - 20 mm, for the passage of the laser beam. The internal surface of the opening has a frusto-conical shape, in order to avoid interference with the tip of focusing head 4.

In such manner, when robotised arm 3 is lowered, pressure ring 11 is pressed against the workpiece to be welded, generally two or more superimposed plates 28, and the laser beam can perform weld strokes inside ring 11, for instance circles or other figures with a diameter of about 10 - 12 mm.

According to the invention, in this first exemplary embodiment, robotised arm 3 is controlled, through the program stored in the computerised control system, so as to carry out by means of the laser beam a heart-shaped weld, the path of which is shown by reference numeral 13.

Heart-shaped path 13 has the advantage of allowing the weld to start and end always at the centre of pressure ring 11 of pressure arm 10.

Actually, as shown in Fig. 2, the laser beam describes a path including a first arc extending from point "o" to point "a" and having a radius r, a second arc extending from point "a" to point "b" and having a radius R, and a third arc extending from point "b" to point "o" and having again a radius r. In this way, at the end of the welding, the beam is again at the ring centre.

After weld 13 has been accomplished, the head is raised and translated to accomplish a new weld in another point of the workpiece to be welded.

The spacing between the welds can be chosen at will, according to the requirements, and it is possible to accomplish joined welds, thereby forming an actual chain of weld rings, or welds spaced apart.

By carrying out heart-shaped or circle-shaped welds, the welding surface is moreover increased with respect to conventional spot, stroke or line welding.

It is self evident that the system described above allows accomplishing welds of any shape, while remaining inside ring 11 of pressure arm 10.

The shape and the size of pressure arm 10 can be changed at will: more particularly, a simple pressure plate or an element with horseshoe, U or V shape, or a square or rectangular element can be provided in place of ring 11.

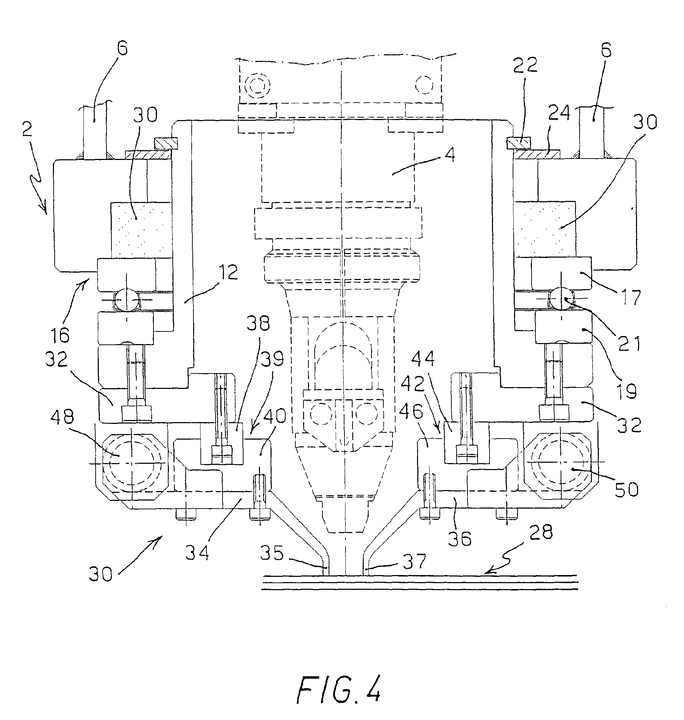

Figs. 4, 5 and 6 show a second exemplary embodiment of a pressure foot for a laser welding head made in accordance with the present invention.

A welding head 2 comprises a carrier structure 6, connected to a robotised arm, a focusing head 4 arranged to receive a laser beam and to focus it onto a workpiece 28 to be welded, and a pressure foot 30, coupled to carrier structure 6 and arranged to exert a certain pressure onto workpiece 28 during welding.

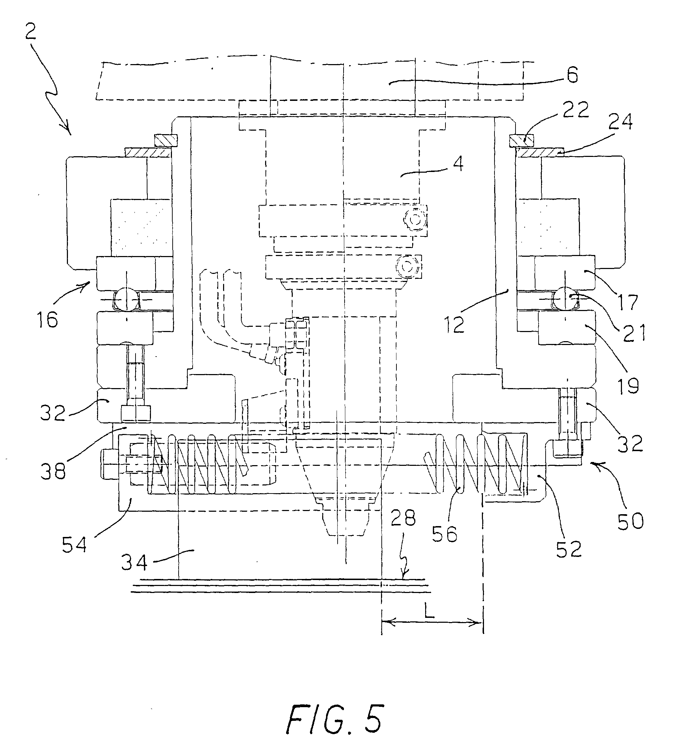

Welding head 2 is generally coupled with a robotised arm, not shown in Figs. 4 and 5 and having for instance the same characteristics as the robotised arm shown in Fig. 3. Moreover, in order to allow pressure foot 30 to exert a suitable pressure on the workpiece to be welded, carrier structure 6 of welding head 2 is coupled with robotised arm 3 through a system of air springs like the one previously depicted in Fig. 3. In this way the pressure exerted by foot 6 can be modulated at will by merely controlling the vertical movement of robotised arm 3.

Pressure foot 30 comprises an upper portion 12 of circular shape, coupled with carrier structure 6 and provided with an internal opening through which focusing head 4 passes, and a pair of pressure arms 34, 36 which obliquely extend towards the welding zone.

According to the invention, a first plane bearing 16 is arranged between pressure foot 30, and more particularly upper portion 12 thereof, and carrier structure 6, which bearing allows a radial translation in all directions and an idle rotation of foot 30 relative to carrier structure 6.

Pressure foot 30 is joined with a first race 19 of plane bearing 16, whereas a second race 17 is joined with head carrier structure 6. A plurality of balls 21 arranged between the two races thus allow ring 19, and consequently pressure foot 30, to rotate and perform a translational movement relative to head carrier structure 6.

The radial translation of pressure foot 30, allowed by plane bearing 16, is laterally limited by a ring-shaped portion 30 made of a closed-cell polyurethane foam material, located between upper portion 12 of foot 30 and carrier structure 6 of welding head 2. The elastomeric properties of the material forming ring-shaped portion 30 guarantee, in time, a perfect centring of focusing head 4 with respect to pressure foot 30.

Ring-shaped portion 30 can be replaced by a plurality of elements, made of the same material, located externally of the circumference of upper portion 12, or by a plurality of contrasting spring means like the ones previously depicted in Fig. 1.

On the contrary, the rotary movement of pressure foot 30, allowed by the same plane bearing 16, is not limited but is only slowed down by the friction between material 30 and the adjacent surfaces. The foot rotation is exploited to orient pressure arms 34, 36 with respect to the welding head, according to the welding direction. Actually, it is to be reminded that it would be impossible to orient pressure arm 10 by rotating head 2, which is mounted on robotised arm 3, since said head could not rotate by 360°. In order to rotate pressure foot 30 the robot uses an external orienting device, not shown in the drawings, which positions pressure arms 34, 36 according to the required angle.

A radial stop resilient ring 22, or Sieger ring, is used, in conjunction with a fixed ring 24, for mounting foot 30 within carrier structure 6.

According to the invention, each pressure arm 34, 36 is coupled with upper portion 12 of foot 30 by means of a rectilinear bearing 39, 42. More particularly a plate 32, having a central circular opening 58 through which focusing head 4 passes, is secured to upper portion 12 of foot 30 and acts as a support for both rectilinear bearings. Each bearing comprises a guide 38, 44, secured to plate 32, and a slide 40, 46, sliding on the guide. Each slide 40, 46 is coupled, through screws, with a respective pressure arm 34, 36 of which the position, and more particularly the spacing from the laser beam used for welding, can be adjusted at will. The adjustments of the two pressure arms are therefore independent. Moreover, in case of some particular processing, it is possible to mount only one of the pressure arms.

Rectilinear bearings 39, 42 allow welding head 2 to carry out a rectilinear movement, independent of the translation movement allowed by plane bearing 16, while keeping the pressure arms pressed onto workpiece 28 being processed.

Each pressure arm 34, 36 has: a horizontal portion provided with holes or slots for the passage of the corresponding screws for securing the arm to slide 40, 46; an inclined portion extending towards the welding zone; and a vertical end portion 35, 37 which presses on workpiece 28 being processed. Preferably, the length of each pressure arm, and more particularly of vertical pressing portion 35, 37, is greater than distance L, shown in Fig. 5, travelled by head 2 during a welding stroke.

Pressure arms 34, 36 are coupled with respective return mechanisms 48, 50, which bring them back to their starting rest positions after a welding stroke has been accomplished. Each return mechanism comprises a helical spring 51, 56 of which a first end is coupled to the associated pressure arm 34, 36 through a connection element 53, 54, and a second end is coupled to plate 32 through a stop 49, 52. More particularly, Fig. 5 shows an end-of-travel position of pressure arm 34, at the end of a welding stroke, where spring 56 is completely expanded.

When, in the subsequent phase, the head is slightly raised, spring 56 brings arm 34 back to the starting rest position.

As an alternative, the two return mechanisms 48, 50 associated with the pressure arms can consist of pneumatic cylinders, not shown in the drawings, suitably controlled in order to bring the pressure arms back at the end of each welding stroke.

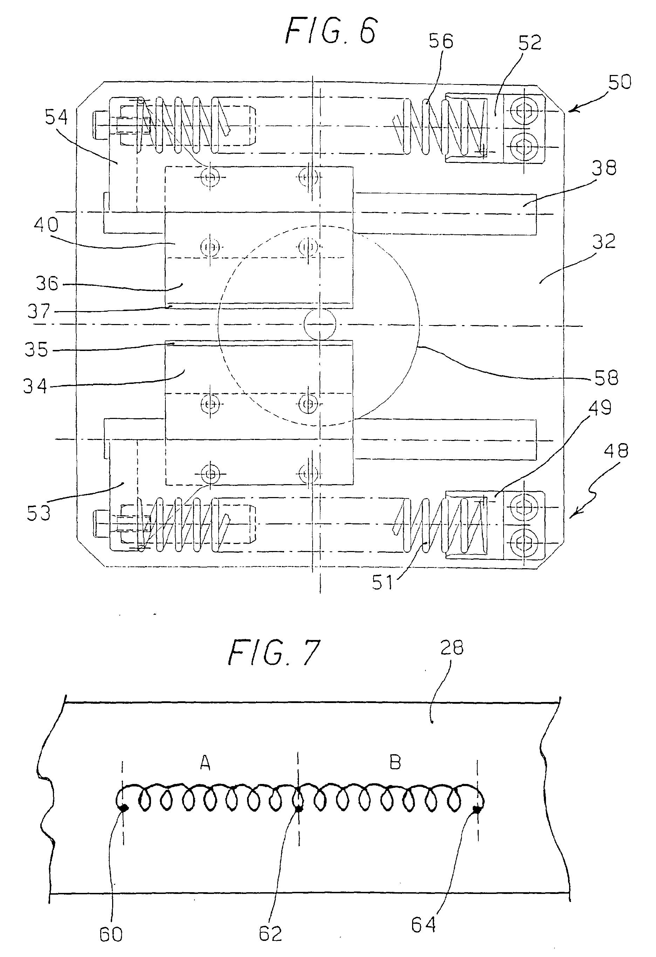

Fig. 7 shows an example of a weld path on a plate 28, accomplished by means of a welding head 2 equipped with a pressure foot as shown in Figs. 4 to 6. More particularly, there can be seen a first weld stroke A, from initial point 60 to intermediate point 62, and a second weld stroke B where the weld is resumed at point 62 and arrives at end point 64. Beyond point 64, the weld can then continue with subsequent strokes, in continuous or discontinuous manner. The path followed by the laser within each stroke, in the example a cycloid, can be chosen at will, obviously by remaining within the movement limits imposed by plane bearing 16 and rectilinear bearings 39, 44. The cycloid path has the advantage of increasing the welding surface and of guaranteeing an optimum seal even in the points where welding is stopped to bring foot 30 back and is then resumed.

By using a laser welding head equipped with a pressure foot 8, 30 made in accordance with the present invention, it is therefore possible to accomplish welds even along non-rectilinear paths, in continuous or discontinuous manner, by using the following processing steps:
a) moving welding head 2 close to workpiece 28 to be welded so as to bring pressure foot 8, 30 in contact with workpiece 28;
b) turning the laser beam on and moving welding head 2 according to a predetermined path, so as to accomplish a first weld stroke;
c) turning the laser beam off and raising welding head 2 until pressure foot 8, 30 is spaced apart from workpiece 28, and bringing the pressure foot back to its starting rest position;
d) repeating steps a), b) and c) several times, possibly by displacing welding head 2 if a welding by discontinuous strokes is to be performed.

## Claims

1. Pressure foot (8; 30) for a welding head (2) employing a laser beam, the foot comprising at least one pressure arm (10; 34, 36) coupled with the welding head (2), said at least one pressure arm (10; 34, 36) having a free end (11; 35, 37) shaped so as to form a pressure surface by which said at least one pressure arm (10; 34, 36) presses against the surface of a workpiece (28) to be welded, characterised in that translation means (16) are provided between said at least one pressure arm (10; 34, 36) and said welding head (2) to allow said at least one pressure arm (10; 34, 36) to translate along at least one direction substantially perpendicular to the laser beam.

2. Pressure foot (8; 30) according to claim 1, wherein said translation means (16) allow the translation of said at least one pressure arm (10; 34, 36) on a plane substantially perpendicular to the laser beam.

3. Pressure foot (8) according to claim 1, wherein rotation means are provided between said pressure arm (10) and said welding head (2) to allow the rotation of said pressure arm (10) about an axis parallel to or coinciding with the axis of said laser beam.

4. Pressure foot (8) according to claim 3, wherein said translation means and said rotation means consist of a plane bearing (16).

5. Pressure foot (8) according to claim 4, wherein the amplitudes of the translational movements of said pressure arm (10) are laterally limited by a plurality of contrasting elements (18), which are each equipped with a spring (20) and are located on a carrier structure (6) of the welding head (2), around an upper portion (12) of the pressure foot (8).

6. Pressure foot (8) according to claim 5, wherein the pressure arm (10) has, in correspondence with a free end, a pressure element (11) of circular shape having an internal opening (15) through which the laser beam passes.

7. Pressure foot (8) according to claim 5, wherein the pressure arm (10) has, in correspondence with a free end, a pressure element (11) having horseshoe or U shape, or V shape.

8. Pressure foot (8) according to claim 6 or 7, wherein said pressure arm (10) is pivotally mounted (14) on an upper portion (12) of the foot (8), so as to be turned upwards when not in use.

9. Pressure foot (30) according to claim 1 or 2, wherein said translation means comprise a plane bearing (16) having an upper race (17) joined with a carrier structure (6) of the welding head (2) and a lower race (19) joined with an upper portion (12) of the foot (30) itself.

10. Pressure foot (30) according to claim 9, wherein the amplitudes of the translational movements are laterally limited by one or more element (30) with elastomeric properties.

11. Pressure foot (30) according to claim 10, wherein said element (30) with elastomeric properties is a ring-shaped portion (30) of closed-cell polyurethane foam material, arranged between said upper portion (12) of the foot (30) and said carrier structure (6) of the welding head (2).

12. Pressure foot (30) according to claim 9, wherein said plane bearing (16) also allows the rotation of the foot (30) about the axis of the head (2).

13. Pressure foot (30) according to claim 9, wherein said upper portion (12) is coupled with said at least one pressure arm (34, 36) through a rectilinear bearing (39, 42) allowing the welding head (2) to perform a rectilinear movement relative to said at least one pressure arm (34, 36), said rectilinear movement being independent of the translational movement allowed by the plane bearing (16).

14. Pressure foot (30) according to claim 13, wherein said at least one pressure arm (34, 36), slidable on said rectilinear bearing over a length L, has a surface (35, 37) pressing on the surface of a workpiece (28) to be welded and having a length substantially equal to or greater than said length L.

15. Pressure foot (30) according to claim 13, wherein said at least one pressure arm (34, 36) is coupled with a return mechanism (48, 50) which brings it back to the starting rest position.

16. Pressure foot (30) according to claim 15, wherein said return mechanism (48, 50) comprises a helical spring (51, 56) of which a first end is coupled with said at least one pressure arm (34, 36) and a second end is coupled with said upper portion (12) of the foot (30).

17. Pressure foot (30) according to claim 15, wherein said return mechanism (48, 50) comprises a pneumatic cylinder of which a first end is coupled with said at least one pressure arm (34, 36) and a second end is coupled with said upper portion (12) of the foot (30).

18. Pressure foot (30) according to claim 13, wherein the position of said at least one pressure arm (34, 36) can be adjusted so as to move the arm closer to or farther from the axis of the laser beam used for welding.

19. Pressure foot (30) according to claim 15, comprising a pair of pressure arms (34, 36) symmetrically arranged with respect to a plane passing through the laser beam axis, both pressure arms (34, 36) being coupled, through respective linear bearings (39, 42), with a plate (32) provided with a central circular opening (58) and secured to said upper portion (12).

20. Pressure foot (8, 30) according to any preceding claim, wherein, during welding, the free end of said at least one pressure arm (10; 34, 36) is kept pressed on the surface of the workpiece (28) to be welded by means of a system of air springs (5) coupled with said welding head (2).

21. A method of welding a workpiece (28) by means of a welding head (2) employing a laser beam and equipped with a pressure foot (8; 30) made in accordance with any preceding claim, the method comprising the steps of:
a) moving the welding head (2) close to the workpiece (28) to be welded so as to press said pressure foot (8, 30) on said workpiece (28);
b) turning the laser beam on and moving the welding head (2) according to a predetermined path, so as to accomplish a first weld stroke;
c) turning the laser beam off and raising the welding head (2) until the pressure foot (8, 30) is spaced apart from the workpiece (28), and bringing said pressure foot (8, 30) back to its starting rest position.

22. Method according to claim 21, wherein steps a), b) and c) are repeated several times, so as to accomplish a continuous weld made of several weld strokes.

23. Method according to claim 22, wherein the path of said continuous weld is a cycloid.

24. Method according to claim 21, wherein steps a), b) and c) are repeated several times, by displacing each time the welding head (2) at the end of step c), so as to accomplish a discontinuous weld made of several separate weld strokes.
